# EUROPEAN PATENT APPLICATION

(11) **EP 4 709 050 A1**
(43) Date of publication of application: **11.03.2026**
(21) Application number: 24868664.4
(22) Date of filing: 13.09.2024
(51) Int. Cl.: H05B 6/12, H05B 6/06, F24C 7/08, F24C 15/10, H02M 1/00, H02M 1/08, F24C 15/34

(54) **HOME APPLIANCE**

(30) Priority: 21.09.2023 KR 20230126657; 21.09.2023 KR 20230126658; 26.09.2023 KR 20230129155; 22.02.2024 KR 20240026117; 13.08.2024 KR 20240108517
(71) Applicant: LG Electronics Inc., Yeongdeungpo-gu Seoul 07336 (KR)
(72) Inventor: MOON, Hyunwook, Seoul 08592 (KR); KIM, Eui Sung, Seoul 08592 (KR); PARK, Kyungho, Seoul 08592 (KR)
(74) Representative: Vossius & Partner Patentanwälte Rechtsanwälte mbB
(86) International application number: PCT/KR2024/014088
(87) International publication number: WO 2025/063687

(57) **Abstract**

Disclosed is a home appliance for protecting an inverter circuit by monitoring a frequency operation region of the inverter circuit. The home appliance determines a capacitive region by measuring a phase difference between a switching voltage and a resonance current of the inverter circuit, and sets an operation of the inverter circuit if a frequency operation region of the inverter circuit is determined to be the capacitive region more than a predetermined number of times, thereby restricting an operation of the inverter circuit in the capacitive region.

## Description

### TECHNICAL FIELD

The present disclosure relates to a home appliance, and more particularly, to a home appliance including an induction heating cooktop.

### BACKGROUND ART

Recently, an induction range using induction heating technology is attracting attention as a next-generation cooking appliance that may replace a gas range due to advantages such as high heating efficiency, fast heating speed, stability, convenience, etc.

An induction heating cooktop product includes an induction heating cooktop having a heating coil composed of a ritz wire. When an induction-compatible container is located at a predetermined burner position, the container is heated. This scheme has a disadvantage in that the container should be placed only at a predetermined position, and has a disadvantage in that heating efficiency decreases when the position of the container is slightly incorrect.

Accordingly, all-free induction heating technology is being developed. This is a technology capable of heating the induction-compatible container even when the induction-compatible container is positioned not only at a predetermined area of an induction heating top plate but also at various positions thereof, and has the advantage that various sized containers and a multiple-compartment container having three or more compartments may also be heated.

In the induction heating system, the inverter is embodied as a resonant inverter to generate an electromagnetic force to generate an eddy current for heating the container. A operating frequency region of the induction heating system including a resonant network including a heating coil and a resonant capacitor may be largely divided into an inductive operating region and a capacitive operating region based on a resonance frequency. The induction heating system operates in a frequency-driven manner mainly in the inductive operating region.

When induction heating system operates in the capacitive operating region, the switching element undergoes thermal breakdown due to an increase in power loss of the switching element, or the operation time is shortened. For this reason, the operation in the capacitive operating region should be limited as much as possible.

Prior art 1 (US 9596721 B2) adjusts the operating frequency based on a detecting result of an operating region based on a comparative voltage. However, the prior art 1 has a disadvantage in that there is a high possibility of an error according to the magnitude of the resonant current. For example, during the high output operation of the paramagnetic container, the output voltage is greater than the comparative voltage, and thus, there is a problem in that a determination error of determining that the operating region is an region equal to or lower than the resonance frequency occurs.

### SUMMARY OF DISCLOSURE

### TECHNICAL PURPOSE

A purpose of the present disclosure is to provide a home appliance that monitors a frequency operating region of an inverter circuit in an induction heating system and prevents the inverter circuit from being driven in a capacitive region.

A purpose of the present disclosure is to provide a home appliance that detects a capacitive region based on a measuring result of a phase difference between a resonant current and a switching voltage of an inverter circuit, and restricts an operation of the inverter circuit in the capacitive region.

A purpose of the present disclosure is to provide a home appliance capable of satisfying a zero voltage switching (ZVS) operation to prevent an increase in loss in a switching element of an inverter circuit.

A purpose of the present disclosure is to provide a home appliance capable of comparing a switching time point of an inverter circuit with a time point of a resonant current and determining a frequency operating region regardless of an operating condition such as a container type, a container coupling state, an input voltage, etc. based on the comparing result.

A purpose of the present disclosure is to provide a home appliance capable of initializing an inverter circuit when the frequency operating region of the induction heating system is a capacitive region, thereby protecting the system.

The purposes to be solved according to an embodiment of the present specification are not limited to the above-mentioned purposes, and other purposes not mentioned will be clearly understood by those skilled in the art from the following description.

### TECHNICAL SOLUTION

The home appliance according to an embodiment of the present disclosure monitors the frequency operating region of the inverter circuit to prevent the inverter circuit from being driven in the capacitive region.

Specifically, the home appliance determines the frequency operating region of the inverter circuit, and performs the operation setting of the inverter circuit in response to that the frequency operating region is determined as the capacitive region a predetermined number or greater of times based on a result of the determination.

A home appliance according to an embodiment of the present disclosure detects a capacitive region based on a measuring result of a phase difference between a resonant current and a switching voltage of an inverter circuit, and limits an operation of the inverter circuit in the capacitive region.

Specifically, the home appliance compares the voltage corresponding to the resonant current with a reference voltage, and determines the frequency operating region of the inverter circuit based on the pulse signal based on the comparison result. In response to that the frequency operating region is determined as the capacitive region a predetermined number or greater of times, the home appliance initializes the inverter circuit, or performs the switching operation of the inverter circuit at a switching frequency immediately before the capacitive region.

The home appliance according to an embodiment of the present disclosure satisfies a zero voltage switching (ZVS) operation to prevent the increase in loss in the switching element of the inverter circuit.

Specifically, in response to that the frequency operating region of the inverter circuit is determined as the capacitive region a predetermined number or greater of times, the home appliance adjusts the switching frequency for driving the inverter circuit to change the frequency operating region to the inductive region.

The home appliance according to an embodiment of the present disclosure determines the frequency operating region regardless of operating conditions such as a container type, a container coupling state, and an input voltage.

Specifically, the home appliance compares a switching time point of the inverter circuit with a time point of the resonant current to generate a pulse signal, generates a trigger signal in synchronization with a falling edge of the pulse signal, and determines a frequency operating region based on an elapsed time from a switching frequency count start time point of the inverter circuit to a time point at which the trigger signal occurs.

A home appliance according to an embodiment of the present disclosure protects the system when the frequency operating region of the induction heating system is the capacitive region.

Specifically, in response to that the frequency operating region is the capacitive region, the home appliance performs the operation setting of the inverter circuit including at least one of the initialization of the inverter circuit, the switching operation of the inverter circuit at the switching frequency immediately before the capacitive region, and the notification the message to the user. In addition, the home appliance adjusts the switching frequency to change the frequency operating region to the inductive region, thereby limiting the operation of the inverter circuit in the capacitive region.

### TECHNICAL EFFECT

As described above, the home appliance of the present disclosure monitors the frequency operating region of the inverter circuit to determine the frequency operating region. In response to that the frequency operating region is determined as the capacitive region the predetermined number or greater of times based on a result of the determination, the home appliance performs the operation setting of the inverter circuit to prevent the inverter circuit from being driven in the capacitive region.

The home appliance of the present disclosure may compare the voltage corresponding to the resonant current with the reference voltage, and determine the frequency operating region of the inverter circuit based on the pulse signal based on the comparison result.

In response to that the frequency operating region is determined as the capacitive region the predetermined number or greater of times, the home appliance of the present disclosure may initialize the inverter circuit or perform the switching-operation of the inverter circuit at a switching frequency immediately before the capacitive region, thereby limiting the operation of the inverter circuit in the capacitive region.

The home appliance of the present discourse may adjust the switching frequency for driving the inverter circuit such that the frequency operating region is changed to the inductive region, thereby satisfying the ZVS operation to prevent an increase in loss in the switching element of the inverter circuit.

The home appliance of the present disclosure compares the switching time point of the inverter circuit with the time point of the resonant current to generate the pulse signal, generates the trigger signal in synchronization with the falling edge of the pulse signal, and determines the frequency operating region based on the elapsed time from a switching frequency count start time point of the inverter circuit to a time point at which the trigger signal occurs, thereby determining the frequency operating region regardless of operating conditions such as a container type, a container coupling state, an input voltage, and the like.

In response to that the frequency operating region of the induction heating system is the capacitive region, the home appliance of the present disclosure may adjust the switching frequency to change the frequency operating region to the inductive region, thereby limiting the operation of the inverter circuit in the capacitive region and thus protecting the induction heating system/

In addition, when the frequency operating region is the capacitive region, the home appliance of the present disclosure may initialize the inverter circuit or perform the switching operation of the inverter circuit at the switching frequency immediately before the capacitive region, thereby securing the stable operation of the induction heating system.

In addition, the home appliance of the present disclosure may limit the operation of the inverter circuit in the capacitive region to prevent the switching element from undergoing the thermal breakdown due to the increase in power loss of the switching element.

In addition, the home appliance of the present disclosure may detect the resonant current time-point using one comparator to prevent an error due to the magnitude of the resonant current from occurring. Thus, the home appliance may accurately monitor the frequency operating region of the induction heating system.

In addition to the above-described effects, specific effects of the present disclosure will be described together while describing specific matters for implementing the present disclosure.

### BRIEF DESCRIPTION OF DRAWINGS

FIG. 1 is an exploded perspective view illustrating an exploded state of a cooktop in a home appliance according to an embodiment of the present disclosure.
FIG. 2 is a plan view of the cooktop shown in FIG. 1 and a diagram showing a configuration of a PCB pattern coil assembly.
FIG. 3 is a diagram illustrating an inverter circuit and a driving block of a home appliance according to an embodiment of the present disclosure.
FIG. 4 is a diagram illustrating a resonant current time-point sensing circuit of FIG. 3.
FIGS. 5 to 7 are waveform diagrams illustrating determining of a frequency operating region of an inverter circuit based on a time point at which a resonant current interrupt service routine (ISR) trigger occurs.
FIG. 8 is a flowchart illustrating an interrupt service routine operation of a home appliance according to an embodiment of the present disclosure.
FIG. 9 is a diagram illustrating an inverter circuit and a load circuit in a home appliance according to an embodiment of the present disclosure.

### DETAILED DESCRIPTIONS

The above-described purposes, features, and advantages will be described in detail with reference to the accompanying drawings, and accordingly, a person having ordinary skill in the art to which the present disclosure pertains will be able to easily implement the technical idea of the present disclosure. In the description of the present disclosure, when it is determined that a detailed description of a known technology related to the present disclosure may unnecessarily obscure the gist of the present disclosure, the detailed description will be omitted. Hereinafter, preferred embodiments according to the present disclosure will be described in detail with reference to the accompanying drawings. In the drawings, the same reference numerals are used to indicate the same or similar components.

Although the first, second, and the like are used to describe various components, it is obvious that these components are not limited by these terms. These terms are used to distinguish only one component from another component. Unless otherwise stated, the first component may be the second component.

The present disclosure is not limited to the embodiments disclosed below, but various changes may be applied thereto and the present disclosure may be implemented in various different forms. However, the present embodiment is provided so that the present disclosure is complete and the scope of the present disclosure is fully informed to those skilled in the art. Therefore, the present disclosure is not limited to the embodiments disclosed below, but it should be understood that a configuration of one embodiment and a configuration of another embodiment are substituted with each other or are added to each other, and all changes, equivalents, and substitutes included in the technical spirit and scope of the present disclosure are included in the present disclosure.

The accompanying drawings are only set forth for easy understanding of the embodiments disclosed in the present disclosure, and the technical spirit disclosed in the present disclosure is not limited by the accompanying drawings, and it should be understood that all changes, equivalents, and substitutes included in the spirit and technical scope of the present disclosure are included in the present disclosure. In the drawings, the components may be expressed to be larger or smaller in size or thickness in consideration of convenience of understanding, etc. However, the scope of the present disclosure should not be limited thereto.

The terms used herein are used only to describe specific embodiments or embodiments, and are not intended to limit the present disclosure. As used herein, the singular constitutes "a" and "an" are intended to include the plural constitutes as well, unless the context clearly indicates otherwise In the present disclosure, terms such as "include" and "comprise" are intended to designate that a feature, a number, a step, an operation, a component, a part, or a combination thereof as described in the present disclosure exist. That is, it should be understood that in the present disclosure, the terms such as "include" and "comprise" do not exclude the presence or addition of one or more other features, numbers, steps, operations, components, parts, or combinations thereof.

Terms including ordinals, such as first, second, etc., may be used to describe various components, but the components are not limited by the terms. The terms are used only for the purpose of distinguishing one component from another component.

When it is mentioned that one component is "connected" or "coupled" to another component, it should be understood that one component may be directly connected or coupled to another component, or still another component may be present therebetween. On the other hand, when it is mentioned that one component is "directly connected" or "directly coupled" to another component, it should be understood that still another component is absent therebetween.

When one component is referred to as "being disposed on top of" or "being disposed under" another component, it should be understood that one component may be directly disposed on top of or under another component or still another component may be present therebetween.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

For example, embodiments in which a heating coil assembly is used in a cooking appliance are described in the present disclosure. However, in some further embodiments, the heating coil assembly may be applied to other home appliances that require induction heating.

For example, the heating coil assembly may be mounted on a washing machine to heat a water tank, a drum, or a washing tub inside the washing machine or to heat washing water.

In another example, the heating coil assembly may be mounted on a water purifier and used to heat a hot water pipe or a water tank.

In still another example, the heating coil assembly may be mounted on a laundry dryer or a laundry care apparatus and used to heat air for drying the laundry.

In still yet another example, the heating coil assembly may be mounted on an electric port or a rice cooker and used to heat a liquid or food therein.

### [Overall Structure of Induction Heating Cooktop]

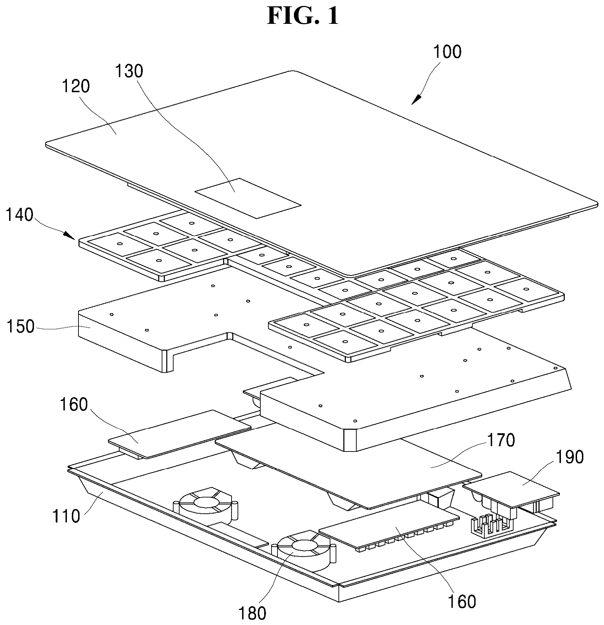

FIG. 1 is an exploded perspective view illustrating an exploded state of an induction heating cooktop 100 in a home appliance according to an embodiment of the present disclosure.

The home appliance according to an embodiment of the present disclosure may be an oven range type home appliance in which the cooktop 100 is disposed in an upper area and an oven is disposed in a lower area. The present disclosure is not limited thereto, and the home appliance according to an embodiment of the present disclosure may be embodied as a home appliance in which the cooktop 100 is provided alone.

Referring to FIG. 1, the home appliance according to an embodiment of the present disclosure includes the induction heating cooktop 100. The induction heating cooktop 100 may include a casing 110 and a top plate 120.

According to the present embodiment, an exterior of the cooktop 100 may be defined by the casing 110 and the top plate 120. The casing 110 may be disposed under the top plate 120, and may constitute a front surface, a rear surface, a side surface, and a bottom surface of the cooktop 100. The top plate 120 may be disposed at a top of the cooktop 100 and may constitute an outer appearance of an upper surface of the cooktop 100. The top plate 120 may be made of ceramic glass for mounting a cooking container thereon.

An accommodation space may be formed inside the casing 110. The accommodation space formed inside the casing 110 may be opened upwardly. In an example, the casing 110 may be formed in a hexahedral shape with an open upper side. In the accommodation space surrounded with the top plate 120 and the casing 110, various internal components constituting the cooktop 100 may be accommodated.

In addition, an integral PCB pattern coil assembly 140 may be disposed under the top plate 120 in the cooktop 100. In the PCB pattern coil assembly 140, at least one heating coil for heating the cooking container via induction heating and at least one sensing coil for sensing the cooking container may be integrally formed with each other.

For example, the PCB pattern coil assembly 140 may include a plurality of PCB pattern coil assemblies according to a size of the top plate 120 of the cooktop 100. For example, when the top plate 120 is divided into three areas including a left area, a central area, and a right area, three PCB pattern coil assemblies 140 may be respectively disposed under the corresponding areas. The PCB pattern coil assemblies 140 may be formed in different sizes to be suitable for the sizes of the left area, the central area, and the right area, respectively. Each of the PCB pattern coil assemblies 140 corresponding to each area may independently operate.

In the PCB pattern coil assembly 140, the heating coil for induction heating, the sensing coil for sensing the container, a temperature sensor for sensing a temperature, a terminal for connection with other components, etc. may be integrally formed with each other. The PCB pattern coil assembly 140 may be divided into a plurality of unit blocks. In an example, one heating coil may be disposed in one unit block. In an example, at least two sensing coils may be disposed in one unit block. In an example, two sensing coils may be disposed between adjacent unit blocks and across the two adjacent unit blocks.

In addition, in the cooktop 100, a supporter 150 may be disposed under the PCB pattern coil assembly 140. The supporter 150 may constitute a skeleton inside the cooktop 100 so as to support various internal components constituting the cooktop 100. In an example, the supporter 150 may be formed in a hexahedral shape with an open lower side. For example, the supporter 150 may be formed in a shape substantially identical with a shape obtained by turning the casing 110 upside down, and may be formed to have a slightly smaller size than that of the casing 110.

According to the present embodiment, the accommodation space may be formed inside the supporter 150, and may be formed as a space surrounded by the bottom portion of the casing 110 and the supporter 150. Various internal components constituting the cooktop 100 may be accommodated in the supporter 150.

For example, a resonant PCB assembly 160 in which capacitors used for resonance or oscillation are mounted, an inverter PCB assembly 170 in which a switching element for applying a current to the heating coil for induction heating, etc. are mounted, a fan 180 for cooling down the internal components, an EMI filter 190 for filtering and blocking various noises mixed with each other on electrical power, and a control PCB assembly in which a controller for controlling the overall operation of the cooktop 100 and circuits for sensing the cooking container are mounted may be accommodated in the supporter 190.

According to the present embodiment, the supporter 150 may also provide a base function for the PCB pattern coil assembly 140. More specifically, a ferrite core may be installed on an upper surface of the supporter 150, the PCB pattern coil assembly 140 may be installed on top of the ferrite core, and the top plate 120 may be installed on top of the PCB pattern coil assembly 140.

In addition, the cooktop 100 may include a control panel 130. The control panel 130 may be disposed on one area of an upper surface of the top plate 120. The control panel 130 may include a UI (user interface) including an adjustment icon for adjusting an operation of the cooktop 100 in a touch manner and a display for displaying an operation state of the cooktop 100.

### [PCB Pattern Coil Assembly]

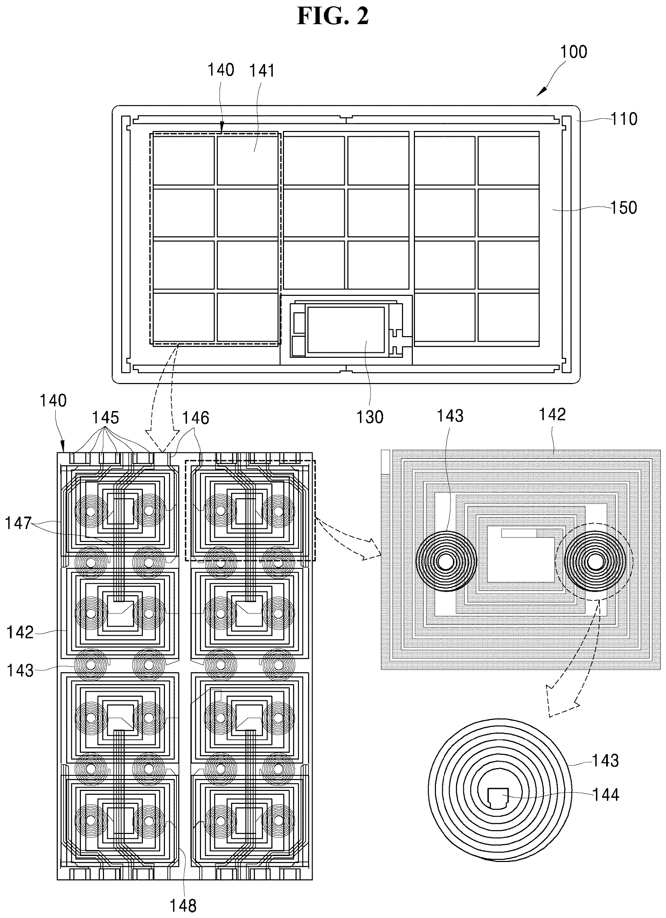

FIG. 2 is a plan view illustrating the cooktop 100 illustrated in FIG. 1 and a configuration of the PCB pattern coil assembly 140.

Referring to FIG. 2, the cooktop 100 may include the casing 110, the supporter 150, and the PCB pattern coil assembly 140. The PCB pattern coil assembly 140 includes the heating coil 142 for induction heating of the cooktop 100 and the sensing coil 143 for sensing the cooking container, and may be disposed in the accommodation space inside the cooktop 100.

The supporter 150 may be disposed on top of the casing 110, the PCB pattern coil assembly 140 may be disposed on top of the supporter 150, and the top plate 120 may be disposed on top of the PCB pattern coil assembly 140.

The PCB pattern coil assembly 140 may include a plurality of PCB pattern coil assemblies according to the size and shape of the cooktop 100. In the present embodiment, it is illustrated that the cooktop 100 is divided into the left area, the central area, and the right area, and includes three PCB pattern coil assemblies 140 corresponding thereto. Each of the PCB pattern coil assemblies 140 may include a plurality of heating coils 142 and a plurality of sensing coils 143.

Each of the PCB pattern coil assemblies 140 may be divided into a plurality of unit blocks 141. The plurality of unit blocks 141 may be arranged in a matrix form. For example, at least one heating coil 142 may be disposed in one unit block 141. For example, at least two sensing coils 143 may be disposed in one unit block 141. In addition, at least two sensing coils 143 may be disposed between adjacent two unit blocks 141 and across the adjacent two unit blocks 141.

Each of the heating coil 142 and the sensing coil 143 formed in the PCB pattern coil assembly 140 may be disposed in a pattern form on a board. In an example, the heating coil 142 may be formed in a polygonal, for example, a square, a rectangular, or a hexagonal pattern. Alternatively, the heating coil 142 may be formed in an annular pattern. For example, the sensing coil 143 may be formed in a circular pattern. Alternatively, the sensing coil 143 may be formed in a circular, square, rectangular, or hexagonal pattern.

In addition, at least one heating coil terminal 145, at least one sensing coil terminal 146, at least one heating coil wiring 147, at least one sensing coil wiring 148, and at least one via may be formed in the PCB pattern coil assembly 140. The heating coil terminal 145 is electrically connected to the heating coil 142 via the heating coil wiring 147, and is electrically connected to the resonant PCB assembly 160 and the inverter PCB assembly 170. The sensing coil terminal 146 is electrically connected to the sensing coil 143 via the sensing coil wiring 148, and is electrically connected to the resonant PCB assembly 160 and the control PCB assembly.

As described above, not only the heating coil 142 but also the sensing coil 143 may be formed in the unit block 141 of the PCB pattern coil assembly 140. In the unit block 141, a plurality of sensing coils 143 are arranged along a front-rear direction, and a plurality of sensing coils 143 are also arranged in a lateral direction.

The PCB pattern coil assembly 140 may include a PCB (hereinafter, referred to as a "heating coil PCB") on which the heating coil 142 is patterned and a PCB (hereinafter, referred to as a "sensing coil PCB") on which the sensing coil 143 is patterned. The PCB pattern coil assembly 140 may be formed in a form in which the heating coil PCB and the sensing coil PCB are stacked in an up-down direction. In one example, the heating coil PCB may be formed in a form in which 10 to 12 layers are stacked, and the heating coils 142 of the layers may be electrically connected to each other via the via. In one example, the sensing coil PCB may be formed in a form in which two layers are stacked, and the sensing coils 143 of the layers may be electrically connected to each other via the via.

In addition, at least one of the heating coil PCB and the sensing coil PCB may be provided in a form in which the coil is patterned on each of both opposite surfaces of the board. In the present embodiment, it is illustrated that the heating coil 142 is patterned on each of both opposing surfaces of the heating coil PCB, and the sensing coil 143 is patterned on each of both opposing surfaces of the sensing coil PCB.

Each of the sensing coils 143 may be disposed to overlap an area where each of the heating coils 142 is formed. In addition, each of the sensing coils 143 may be disposed to overlap an area between two adjacent areas where the two heating coils 142 are formed, respectively.

In the present embodiment, it is illustrated that two sensing coils 143 are disposed in the area where each heating coil 142 is formed, and two sensing coils 143 are disposed between the two heating coils 142 adjacent to each other in the front-rear direction. In addition, a temperature sensor 144 may be provided in the PCB pattern coil assembly 140. In one example, the temperature sensor 144 may be disposed in a center portion of an area of each sensing coil 143.

In an example, the PCB pattern coil assembly 140 may be provided in a form in which the heating coil 142, the sensing coil 143, and the temperature sensor 144 are integrally formed with each other. For example, the PCB pattern coil assembly 140 may be formed in a form in which the heating coil PCB having the heating coil 142 and the sensing coil PCB having the sensing coil 143 and the temperature sensor 144 are stacked. The PCB pattern coil assembly 140 may be provided in a form including one or more pattern coil PCBs.

As described above, the PCB pattern coil assembly 140 has a structure in which a plurality of heating coils 142 for induction heating and a plurality of sensing coils 143 for sensing the cooking container mounted on the ceramic glass are integrally formed with each other using the patterns printed on the PCB. The number of heating coils 142 and sensing coils 143 may be determined based on the size of the cooktop 100.

For example, the integrated PCB pattern coil assembly 140 may include heating coil patterns arranged in 10 layers, sensing coil patterns arranged in two layers, and an electrical insulating material disposed between each heating coil pattern and each sensing coil pattern adjacent to each other to electrically insulate each heating coil pattern and each sensing coil pattern from each other. The electrical insulating material may be formed by curing a prepreg made of a thermosetting resin generally used to form a printed circuit board and glass fibers. For example, the thermosetting resin may be preferably an epoxy resin-based thermosetting resin. Specifically, the epoxy resin-based thermosetting resin may be FR-4.

As described above, the electrical insulating material made of the prepreg may be disposed between adjacent ones of the heating coil patterns respectively disposed in the multiple layers to electrically insulate the adjacent ones from each other, and may be disposed between the adjacent sensing coil patterns to electrically insulate adjacent ones of the sensing coil patterns respectively disposed in the multiple layers from each other. In addition, the electrical insulating material may be constructed to fill an area in which the patterns such as the heating coil pattern and the sensing coil pattern are absent, and may serve to form a layered structure of an individual layer.

Therefore, based on the heating coil pattern and the sensing coil pattern, the PCB pattern coil assembly 140 may have the multilayer structure having a total of 12 layers from a first layer as the uppermost layer to a twelfth layer as the lowermost layer along the up-down direction.

As described above, the heating coil pattern and the sensing coil pattern according to the embodiment of the present disclosure are formed into then integrated PCB pattern coil assembly composed of a plurality of layers, thereby contributing to the simplification of processes such as masking, printing, and etching.

### [Configuration of Home Appliance Based On Inverter Operating Region]

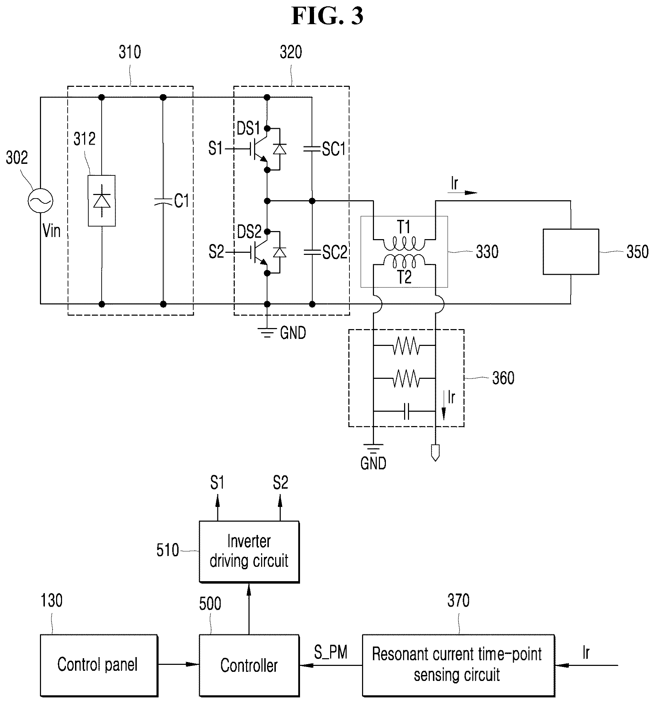

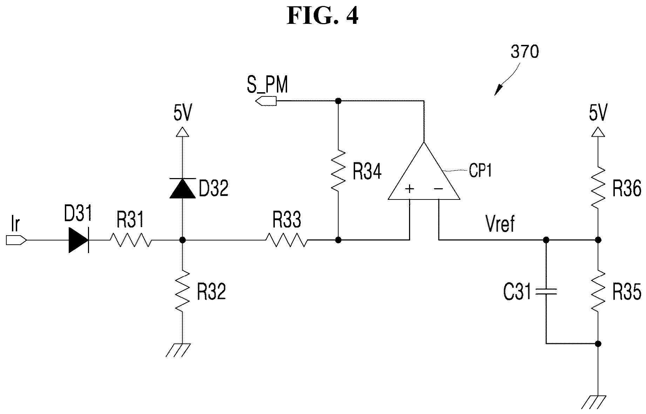

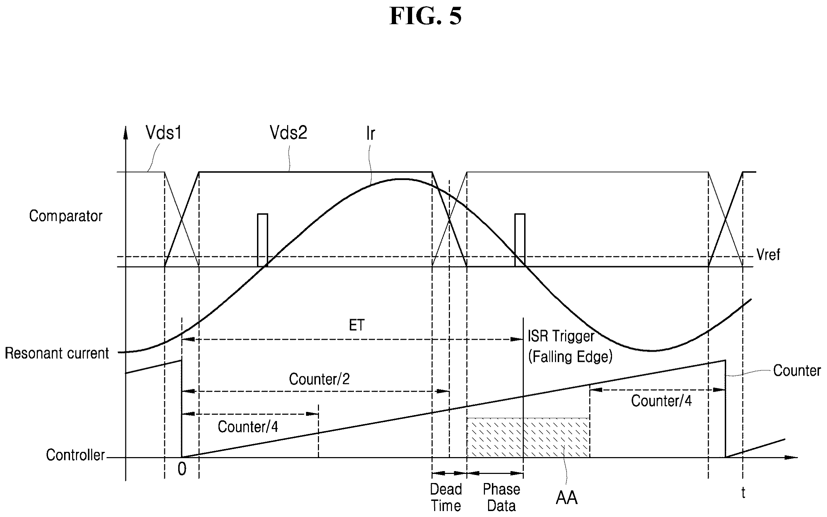

FIG. 3 is a diagram illustrating an inverter circuit and a driving block of a home appliance according to an embodiment. FIG. 4 is a diagram illustrating a resonant current time-point sensing circuit of FIG. 3. FIGS. 5 to 7 are waveform diagrams illustrating determining of a frequency operating region of an inverter circuit according to a time point at which a resonant current interrupt service routine (ISR) trigger occurs.

Referring to FIG. 3, the home appliance according to an embodiment includes a rectifier circuit 310, an inverter circuit 320, a current sensing circuit 330 and 360, a load circuit 350, a resonant current time-point sensing circuit 370, a control panel 130, a controller 500, and an inverter driving circuit 510.

The rectifier circuit 310 may include a plurality of diode elements 312 and a DC link capacitor C1. The diode elements 312 rectify input voltage Vin supplied from a power supply 302 to output a voltage having a pulsating waveform. The DC link capacitor C1 smooths the voltage output from the diode elements 312 to output a DC link voltage

The inverter circuit 320 includes a plurality of switching elements, for example, a first switching element DS1 and a second switching element DS2. The first switching element DS1 and the second switching element DS2 are connected in series to each other and disposed between and connected to a high potential voltage terminal and a low potential voltage terminal. The inverter circuit 320 supplies a resonant current Ir to the heating coil in the load circuit 350 based on the DC link voltage supplied from the DC link capacitor C1 according to the switching operation of the first switching element DS1 and the second switching element DS2.

As described above, the inverter circuit 320 may supply the resonant current to the load circuit 350 according to the switching operation of the first switching element DS1 and the second switching element DS2. In this regard, a resonance frequency of the resonant current Ir is determined based on an inductance value of the heating coil included in the load circuit 350 and a capacitance value of the resonant capacitor.

The first switching element DS1 and the second switching element DS2 may be alternately turned on and off based on a first switching signal S1 and a second switching signal S2 supplied from the inverter driving circuit 510, respectively. The first switching element DS1 and the second switching element DS2 being alternately turned-on and turned-off may be referred to as the switching operation of the first switching element DS1 and the second switching element DS2.

The resonant current Ir is generated via the switching operation of the first switching element DS1 and the second switching element DS2. When the resonant current Ir is supplied to the heating coil, a magnetic field is generated, and an eddy current flows in the container provided on top of the heating coil via electromagnetic induction, and thus, the container is heated.

The inverter circuit 320 further includes a first snubber capacitor CS1 and a second snubber capacitor CS2. The first snubber capacitor CS1 is connected in parallel to the first switching element DS1. The second snubber capacitor CS2 is connected in parallel with the second switching element SW2. The first snubber capacitor CS1 and the second snubber capacitor CS2 are connected in series to each other.

Each of the first snubber capacitor CS1 and the second snubber capacitor CS2 serve to reduce power loss due to hard switching occurring when each of the first switching element DS1 and the second switching element DS2 is turned off.

The control panel 130 may be provided with a user interface including an adjustment icon for adjusting the operation of the home appliance in a touch manner and a display for displaying the operation state of the home appliance. The user may input a target heating intensity through the control panel 130.

The load circuit 350 includes at least one heating coil and at least one resonant capacitor. In this regard, the at least one heating coil and the at least one resonant capacitor may be connected in series or in parallel to each other. Alternatively, the load circuit 350 includes at least one heating coil, at least one resonant capacitor, and at least one relay. In this regard, the at least one heating coil and the at least one resonant capacitor may be selectively connected in series or in parallel to each other via the at least one relay.

The current sensing circuit includes a current converter 330 and a stabilization circuit 360. The current converter 330 may include a primary winding T1 and a secondary winding T2. The primary winding T1 may be disposed between and connected to the inverter circuit 320 and the load circuit 350, and the secondary winding T2 may be disposed between and connected to the ground voltage terminal and the stabilization circuit 360.

Each of the number of coil windings of the primary winding T1 and the number of coil windings of the secondary winding T2 is inversely proportional to a magnitudes of a current flowing through each of the primary winding T1 and the secondary winding T2. The number of coil windings of the secondary winding T2 may be greater than the number of coil windings of the primary winding T1. Accordingly, the magnitude of the current flowing through the secondary winding T2 may be smaller than the magnitude of the current flowing through the primary winding T1.

A current having a magnitude smaller than that of the resonant current Ir flowing through the primary winding T1 may flow through the secondary winding T2. A current flowing through the secondary winding T2, that is, a resonant current whose magnitude has been changed may be supplied to the resonant current time-point sensing circuit 370 via the stabilization circuit 360.

The stabilization circuit 360 is connected in parallel to the secondary winding T2 of the current converter 330. The stabilization circuit 360 includes at least one resistor and at least one stabilization capacitor that are connected in parallel to the secondary winding T2 of the current converter 330.

The at least one resistor of the stabilization circuit 360 has one end connected to the ground voltage terminal and the other end connected to an output terminal through which the resonant current Ir is output. The stabilization capacitor is connected in parallel with the at least one resistor, and one end thereof is connected to the ground voltage terminal, and the other end thereof is connected to an output terminal. The output terminal of the stabilization circuit 360 is connected to the resonant current time-point sensing circuit 370. The stabilization circuit 360 filters noise included in the resonant current Ir through the at least one resistor and the stabilization capacitor.

The current sensing circuit configured as described above senses the resonant current Ir output from the inverter circuit 320 through the current converter 330, and outputs the sensed resonant current Ir to the resonant current time-point sensing circuit 370.

Referring to FIG. 4, the resonant current time-point sensing circuit 370 generates a pulse signal S_PM based on the resonant current Ir output from the current sensing circuit and supplies the pulse signal S_PM to the controller 500. The controller 500 uses the pulse signal S_PM to measure a phase difference between the resonant current Ir and a switching voltage of the second switching element DS2 of the inverter circuit 320.

The resonant current time-point sensing circuit 370 may generate the pulse signal S_PM when a voltage corresponding to the resonant current is lower than the reference voltage Vref and is greater than a zero voltage. For example, the resonant current time-point sensing circuit 370 does not generate the pulse signal PS for a period for which the voltage corresponding to the resonant current is greater than the reference voltage Vref.

The resonant current time-point sensing circuit 370 includes a first diode D31 connected to the output terminal of the current sensing circuit, a first resistor D31 connected in series to the first diode R31, a second diode D32 having one end connected to a power voltage 5V terminal and the other end connected to the first resistor R31, and a second resistor R32 having one end connected to the first resistor R31 and the other end connected to the ground voltage terminal.

In addition, the resonant current time-point sensing circuit 370 includes a third resistor R33 connected in series to the first resistor R31, a comparator CP1 having a first input terminal (+) connected to the third resistor R33 and a second input terminal (-) connected to a reference voltage Vref terminal, and a fourth resistor R34 disposed between and connected to the output terminal of the comparator CP1 and the first input terminal (+) thereof.

In addition, the resonant current time-point sensing circuit 370 further includes first and second reference resistors R36 and R35 connected in series to each other and disposed between and connected to the power voltage 5V terminal and the ground voltage terminal, and a reference capacitor 31 disposed between and connected to a node between the first and second reference resistors R36 and R35 and the ground voltage terminal. The node between the first and second reference resistors R36 and R35 is a reference voltage terminal and is connected to the second input terminal (-) of the comparator CP1.

In this way, the resonant current time-point sensing circuit 370 generates the pulse signal using one comparator. This may reduce a cumulative error occurring in the comparator. In addition, the resonant current time-point sensing circuit 370 may detect the resonant current time-point using one comparator CP1, thereby preventing an error due to the magnitude of the resonant current from occurring. Thus, the home appliance of the present disclosure may accurately monitor the frequency operating region of the inverter circuit 320 of the induction heating home appliance.

In an induction heating cooking appliance, an output load becomes an induction container due to the characteristics of the application thereof. The induction container is largely classified into a ferromagnetic material based container and a paramagnetic material-based container which have different characteristics. The cooking appliance has the container at a position of the heating coil and measures input power in an operation thereof and adjusts the output transmitted to the load via the inverter circuit based on the measurement result. The driving current transmitted to the load may be adjusted to be different from each other for the ferromagnetic material-based container and the paramagnetic material-based container.

For example, the home appliance may drive the heating coil 142 with the power controlled such that the power for the ferromagnetic container having strong magnetism has a lower strength than that of the power for the paramagnetic container having weak magnetism. The strength of the power based on the container material or the strength of the power according to the variation value of the equivalent resistance of the sensing coil may be pre-stored in the memory. The controller 500 may determine the material of the container and drive the heating coil 142 with the strength of the power corresponding to the determined material of the container.

The type of the magnetic material is identified based on whether specific permeability is generated. The specific permeability of the material is calculated as the permeability of the material/the permeability of the vacuum, and indicates how many times the permeability of the material is compared to the vacuum permeability. In the present disclosure, the ferromagnetic material may be defined as a material having the specific permeability much larger than 1. The ferromagnetic material has strong magnetic properties, and the magnetic properties of the ferromagnetic material may change according to the temperature and the external magnetic field. The ferromagnetic material may maintain the magnetic properties even when the external magnetic field is removed. Iron, cobalt, nickel, etc. are typical ferromagnetic materials. In the present disclosure, the paramagnetic material may be defined as a material having the specific permeability equal to or slightly larger than 1. The paramagnetic material has paramagnetic properties and has magnetic properties easily changing depending on the external magnetic field or temperature. Aluminum, platinum, platinum, etc. are representative paramagnetic materials.

Therefore, in order to accurately drive the heating coil with a target power suitable for the material of the container, it is necessary to accurately measure the output power of the load in the home appliance.

The home appliance according to an embodiment detects the resonant current output from the inverter circuit 320, calculates a resonance parameter including at least one of a resonance voltage and a phase based on the resonance current, and measures an output power to be supplied from the inverter circuit to the load circuit based on the resonance current, the resonance voltage, and the phase. In this regard, the phase represents a phase difference between the resonant current and the switching voltage.

The controller 500 controls the inverter driving circuit 510 to drive the load circuit 350 with a target intensity received from the control panel 130. The controller 500 controls switching of switching elements of the inverter driving circuit 510.

The controller 500 measures a phase margin based on the pulse signal S_PM output from the resonant current time-point sensing circuit 370 and a switching frequency count value, and measures the phase difference based on the phase margin. The switching frequency count value may be defined as a value counted from a time point at which the first switching element DS1 of the inverter circuit 320 is turned off and the second switching element DS2 is turned on to a time point of a next period at which the first switching element DS1 is turned off and the second switching element DS2 is turned on. As described above, the switching frequency may be counted during one period of the inverter circuit 320, and the switching frequency count value may be initialized at an interval of one period.

A start time point of phase data may be defined as a "switch frequency count value/2 + dead time/2", and an end time point of the phase data may be defined as a time point of a falling edge of the pulse signal S_PM. The dead time may be defined as a time during which the first switching element DS1 and the second switching element DS2 alternately operate with each other. For example, the dead time may be defined as a time taken until the first switching element DS1 and the second switching element DS2 are completely turned on or completely turned off in response to the first switching signal S1 and the second switching signal S2. The dead time may be preset and pre-stored in a memory of the home appliance.

The controller 500 may calculate the phase difference between the resonant current and the switching voltage based on the phase data.

The controller 500 may calculate the resonance voltage as a value obtained by multiplying an input voltage Vin by an on-time duty of the second switching element DS2. The controller 500 may calculate the resonant current output to the inverter circuit 320 by applying a linear regression equation to the value sensed by the current sensing circuit.

The controller 500 may measure the output power to be supplied to the load circuit 350 based on the resonance voltage VINPUT x Duty, an average resonant current I_{L_avg}, and the phase difference Θ. For example, the output power may be calculated as Power = V_{INPUT} x Duty x I_{L.avg} x cosΘ. The controller 500 may calculate the output power at least once every system control period, for example, every 10ms or 8.3ms.

The controller 500 may control the switching operation of the inverter circuit 320 by adjusting at least one of the switching frequency and the duty ratio of the inverter circuit 320 based on the output power to be supplied to the load circuit 350.

The controller 500 may control at least one relay in the load circuit 350 such that at least one heating coil corresponding to the position of the container is activated according to the position of the container.

The controller 500 measures the phase difference between the resonant current and the switching voltage of the inverter circuit 320 using only the resonant current output from the inverter circuit 320. Thus, the home appliance of the present disclosure may accurately measure the output power to be supplied from the inverter circuit 320 to the load circuit 350.

As described above, the home appliance according to one embodiment of the present disclosure measures the output power of the load by detecting only the resonant current in the hardware manner and measuring the resonant voltage and the phase in the software manner, thereby accurately measuring the power of the load regardless of the change of the heating coil or the change of the inverter PCB pattern.

In addition, the home appliance according to one embodiment of the present disclosure adjusts at least one of the duty ratio and the switching frequency of the inverter circuit based on the measured power of the load. Thus, the reliability of the switch operation of the inverter circuit may be improved.

In addition, in the present disclosure, the home appliance according to one embodiment of the present disclosure measures the power of the load using the resonant current obtained via the current conversion of the driving current to be supplied from the inverter circuit to the load, thereby preventing the influence of the noise of the resistance of the ground voltage terminal.

In addition, the home appliance according to one embodiment of the present disclosure may reduce the influence of noise compared to the home appliance using the existing scheme of measuring the input current using the shunt resistor, thereby improving the reliability of high-frequency operation of the switching elements of the inverter circuit.

In addition, the home appliance according to one embodiment of the present disclosure may accurately measure the power of the load regardless of whether the container is changed to the ferromagnetic material container or the paramagnetic material container. Thus, the home appliance according to one embodiment of the present disclosure may drive the inverter circuit at an appropriate switching frequency according to the material of the container.

In the induction heating home appliance, the operating frequency region may be largely divided into an inductive operating region, an operating region near a resonance point, and a capacitive operating region based on the resonance frequency. The induction heating home appliance performs switching operation of the inverter circuit 320 in the inductive region in order to reduce the power loss of the switching element. When the induction heating home appliance performs switching operation of the inverter circuit 320 in the capacitive region, power loss of the switching element may increase, and the switching element may undergo thermal breakdown.

Accordingly, the induction heating home appliance should monitor the frequency operating region of the inverter circuit 320 to protect the inverter circuit 320 from being driven in the capacitive region.

The inductive operating region may be defined as an operation range in which a phase of a resonant current lags a phase of a drain-source voltage of a switching element of the inverter circuit 320 to satisfy the ZVS(Zero Voltage Switching) and, at the same time, generate a Sinusoidal current, thereby reducing a turn-off current of the switching element to reduce heat generation of the switching element.

The operating region near the resonance point may be defined as an operation range in which the phase of the drain-source voltage of the switching element and the phase of the resonant current are within an error range.

The capacitive operating region may be defined as an operation range in which the phase of the resonant current leads the phase of the drain-source voltage of the switching element of the inverter circuit 320 to result in the ZVS dissatisfaction and increase a turn-on loss of the switching element to increase heat generation of the swing element, thereby causing damage to the switching element during a long-term operation.

The capacitive operating region may be generated under following conditions. For example, in the induction heating home appliance system, when a minimum duty frequency is applied during the interference noise minimization logic operation, the possibility at which the inverter circuit operates in the capacitive region may increase due to the operation near the resonance point. Alternatively, when the resonance point is greater than a switching frequency limit value during the switching frequency control for constant output when the container is in an eccentric state, the capacitive operating region may occur. Alternatively, when the operating switching frequency is changed to the capacitive region when the position of the container is changed from the eccentric position to a correct center position while the container is in the eccentric state, the capacitive operating region may occur.

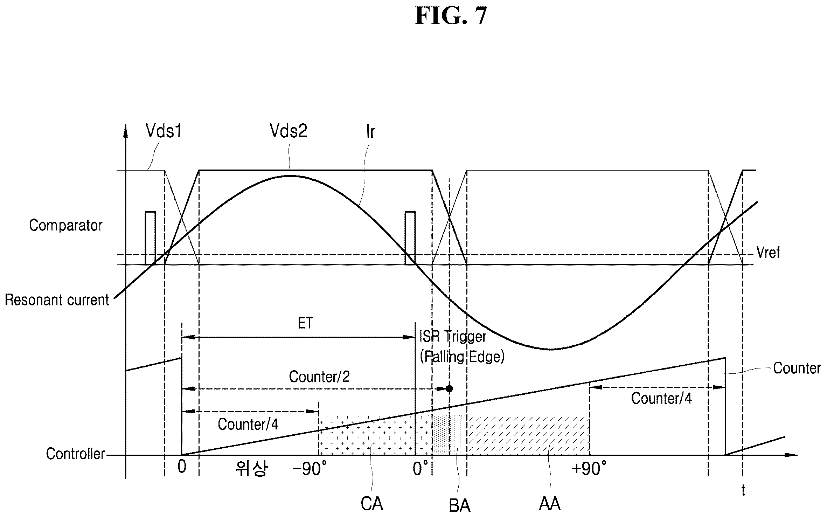

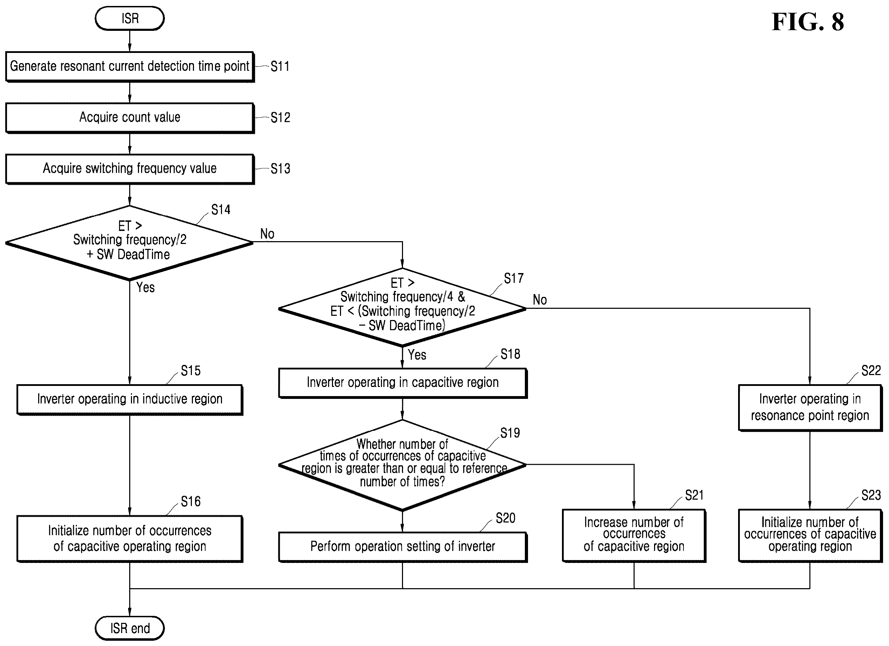

FIG. 5 is a waveform diagram in which an inverter circuit operates in an inductive operating region in an induction heating home appliance. FIG. 7 illustrates a waveform diagram in which an inverter circuit operates in an operating region near a resonance point in an induction heating home appliance. FIG. 8 is a waveform diagram in which an inverter circuit operates in a capacitive operating region in an induction heating home appliance.

Referring to FIGS. 5 to 7, the controller 500 determines a frequency operating region of the inverter circuit 320 based on a time point at which a resonant current interrupt service routine (ISR) trigger occurs. For example, the controller 500 generates a trigger signal ISR in synchronization with a falling edge of the pulse signal S_PM. The controller 500 determines the frequency operating region using an elapsed time ET from a switching frequency count start time point of the inverter circuit 320 to a time point at which the trigger signal ISR occurs.

As shown in FIG. 5, the controller 500 determines the frequency operating region as the inductive region when the elapsed time ET from the switching frequency count start time point to the time point at which the trigger signal ISR occurs is greater than a first reference time. The first reference time may be set to "switching frequency count value/2 + dead time".

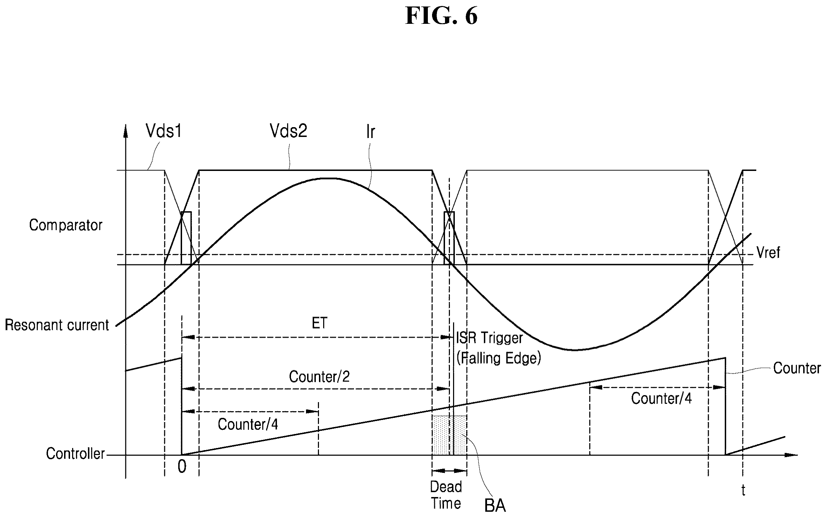

As shown in FIG. 6, the controller 500 determines the frequency operating region as the resonance point region when the elapsed time ET from the start time point of the switching frequency count to the time point at which the trigger signal ISR occurs is smaller than the first reference time and is larger than a second reference time. The second reference time may be set to "switching frequency count value/2 - dead time".

When the frequency operating region of the inverter circuit 320 is determined to be the resonance point region, the controller 500 determines whether to restart the switching operation of the inverter circuit 320 based on the resonant overcurrent and switch overtemperature protection logic. Upon determination that the resonant overcurrent or the switch overtemperature occurs, the controller 500 may initialize or restart the switching operation of the inverter circuit 320.

As shown in FIG. 7, the controller 500 determines the frequency operating region as the capacitive region when the elapsed time from the switching frequency count start time point to the time point at which the trigger signal ISR occurs is smaller than the second reference time and larger than a third reference time. The third reference time may be set to "switching frequency count value/4".

In response to that the frequency operating region is determined as the capacitive region a predetermined number or greater of times based on a result of the frequency operating region determination, the controller 500 performs an operation setting of the inverter circuit 320. The operation setting of the inverter circuit 320 may include initializing the inverter circuit 320. In addition, the operation setting of the inverter circuit 320 may include performing the switching operation of the inverter circuit 320 at a switching frequency immediately before the capacitive region. In addition, the operation setting of the inverter circuit may include alerting a preset message to the user. For example, the preset message may be "Please change a position of a container". Alternatively, the preset message may be "Please change a current container to a different container".

More specifically, the controller 500 determines the frequency operating region of the inverter circuit 320 based on the pulse signal S_PM received from the resonant current time-point sensing circuit 370. The resonant current time-point sensing circuit 370 compares a voltage corresponding to the resonant current Ir with the reference voltage Vref and provides the pulse signal S_PM based on the comparison result to the controller 500. The controller 500 may generate the trigger signal ISR in synchronization with the falling edge of the pulse signal S_PM, and may determine the frequency operating region using the elapsed time ET from the switching frequency count start time point of the inverter circuit 320 to the time point at which the trigger signal ISR occurs.

In response to that the frequency operating region is determined as the capacitive region a predetermined number or greater of times based on a result of the frequency operating region determination, the controller 500 initializes the inverter circuit 320, and performs the switching operation of the inverter circuit 320 at a switching frequency immediately before the capacitive region.

In addition, the controller 500 detects the capacitive region based on a measuring result of the phase difference between the resonant current and the switching voltage and the inverter circuit 320, and limits the operation of the inverter circuit in the capacitive region. For example, in response to that the frequency operating region of the inverter circuit 320 is determined to be the capacitive region the predetermined number or greater of times, the controller 500 may adjust the switching frequency for driving the inverter circuit 320 to change the frequency operating region to the inductive region.

In this way, when the frequency operating region is the capacitive region, the controller 500 performs the operation setting of the inverter circuit 320 including at least one of the initialization of the inverter circuit 320, the switching operation of the inverter circuit at the switching frequency immediately before the capacitive region, and alarming the preset message to the user. In addition, the controller 500 may adjust the switching frequency to change the frequency operating region to the inductive region to limit the operation of the inverter circuit in the capacitive region of the inverter circuit 320.

FIG. 8 is a flowchart illustrating an interrupt service routine operation of a home appliance according to an embodiment of the present invention.

As shown in FIG. 8, the interrupt service routine operating in the controller 500 of the home appliance will be described as follows.

The controller 500 generates a resonant current detection time point in S11. For example, the controller 500 generates the interrupt service routine trigger signal ISR in synchronization with the falling edge of the pulse signal S_PM of the resonant current time-point sensing circuit 370.

Next, the controller 500 acquires a count value of the switching frequency in S12. For example, the controller 500 acquires a value that is counted from a time point at which the first switching element DS1 of the inverter circuit 320 is turned off and the second switch element DS2 is turned on to a time point in a next period which the first switching element DS1 is turned off and the second switch element DS2 is turned on. The switching frequency is counted during one period of the inverter circuit 320, and the count value is initialized at an interval of one period.

Next, the controller 500 acquires a current switching frequency value in S13. For example, the controller 500 may sense the container and control the switching operation of the inverter circuit 320 at a switching frequency corresponding to the sensed container and may adjust the switching frequency based on the output power to be output from the inverter circuit 320 to the load circuit 350. In this way, the controller 500 may acquire the current switching frequency value for controlling the inverter circuit 320.

Next, the controller 500 determines whether the inverter circuit 320 operates in the inductive region in S14. For example, the controller 500 determines whether the elapsed time ET from the switching frequency count start time point to the time point at which the trigger signal ISR occurs is greater than the first reference time set to "switching frequency count value/2+dead time".

Next, the controller 500 determines the frequency operating region of the inverter circuit 320 as the inductive region when the elapsed time ET is greater than the "switching frequency count value/2+dead time" in S15.

Next, the controller 500 initializes the previously recorded number of occurrences of the capacitive operating region in S16.

When the elapsed time ET is smaller than the "switching frequency count value/2+dead time" in step S14, the controller 500 determines whether the inverter circuit 320 operates in the capacitive operating region in S17.

The controller 500 determines the frequency operating region as the capacitive region in response to that the elapsed time from the switching frequency count start time point to the point at which the trigger signal ISR occurs is smaller than the second reference time set to the "switching frequency count value/2-dead time" and is larger than the third reference time set to the "switching frequency count value/4" in S18.

Next, the controller 500 determines whether the number of times the frequency operating region of the inverter circuit 320 is determined to be the capacitive region is greater than or equal to a reference number of times in S19.

Next, upon determination that the number of times the frequency operating region of the inverter circuit 320 is determined to be the capacitive region is equal to or greater than the reference number of times, the controller 500 performs the operation setting of the inverter circuit in S20. For example, in response to that the frequency operating region is determined to be the capacitive region the predetermined number or greater of times based on a result of the determination of the frequency operating region, the controller 500 initializes the inverter circuit 320, or performs the switching operation of the inverter circuit 320 at a switching frequency immediately before the capacitive region. In addition, the controller 500 may alert the message "Please, change the position of the container" or "Please, use another container" to the user.

As described above, the controller 500 may monitor the frequency operating region of the inverter circuit 320 to adjust the switching frequency so that the inverter circuit 320 does not operate in the capacitive region.

In response to that the number of times the frequency operating region of the inverter circuit 320 is determined to be the capacitive region is smaller than the reference number of times in S19, the controller 500 increases the number of occurrences of the capacitive region in S21.

In response to that, returning to step S17 again, the elapsed time ET from the switching frequency count start time point to the time point at which the trigger signal ISR occurs is smaller than "switching frequency count value/2+dead time" and is greater than "switching frequency count value/2-dead time", the controller 500 determines the frequency operating region as the resonance point region in S22.

Next, in response to that the frequency operating region of the inverter circuit 320 is determined as the resonance point region, the controller 500 initializes the number of occurrences of the capacitive region in S23. In addition, when the frequency operating region of the inverter circuit 320 is determined as the resonance point region, the controller 500 may determine whether to restart the inverter circuit 320 based on the resonance overcurrent and switch overtemperature protection logic. For example, when it is determined that the inverter circuit 320 is in the resonant overcurrent or switch overtemperature state based on the protection logic, the controller 500 may initialize the switching operation of the inverter circuit 320. Alternatively, when it is determined that the inverter circuit 320 is in the resonant overcurrent or switch overtemperature state based on the protection logic, the controller 500 may restart the inverter circuit 320.

As described above, the controller 500 monitors the frequency operating region of the inverter circuit 320 to determine the frequency operating region. When it is determined that the frequency operating region is determined as the capacitive region a predetermined number or greater of times based on a result of the determination, the controller 500 performs the operation setting of the inverter circuit 320 to protect the inverter circuit from being driven in the capacitive region.

When it is determined that the inverter circuit 320 is determined as the capacitive region the predetermined number or greater of times, the controller 500 may limit the operation of the inverter circuit 320 in the capacitive region by initializing the inverter circuit 320 or switching the inverter circuit at a switching frequency immediately before the capacitive region.

The controller 500 adjusts the switching frequency for driving the inverter circuit 320 to change the frequency operating region to the inductive region, thereby satisfying the ZVS operation and preventing the increase in loss in the switching element of the inverter circuit 320.

The controller 500 may compare the switching time point of the inverter circuit 320 with the time point of the resonant current to generate the pulse signal, generate the trigger signal in synchronization with the falling edge of the pulse signal, and determine the frequency operating region based on the elapsed time from the switching frequency count start time point of the inverter circuit 320 to the time point at which the trigger signal occurs, thereby determining the frequency operating region regardless of the operating conditions such as the type of the container, the container coupling state, the input voltage, etc.

When the frequency operating region of the inverter circuit 320 is determined as the capacitive region, the controller 500 may adjust the switching frequency to change the frequency operating region to the inductive region, thereby limiting the operation of the inverter circuit in the capacitive region, and thus protecting the induction heating system.

When the frequency operating region of the inverter circuit 320 is the capacitive region, the controller 500 may initialize the inverter circuit 320 or perform the switching operation of the inverter circuit 320 at a switching frequency immediately before the capacitive region, thereby securing the stable operation of the induction heating system .

The controller 500 may limit the operation of the inverter circuit in the capacitive region of the inverter circuit 320, thereby preventing the switching element from undergoing the thermal breakdown due to the increase in the power loss of the switching element SW.

### [Inverter Circuit and Load Circuit]

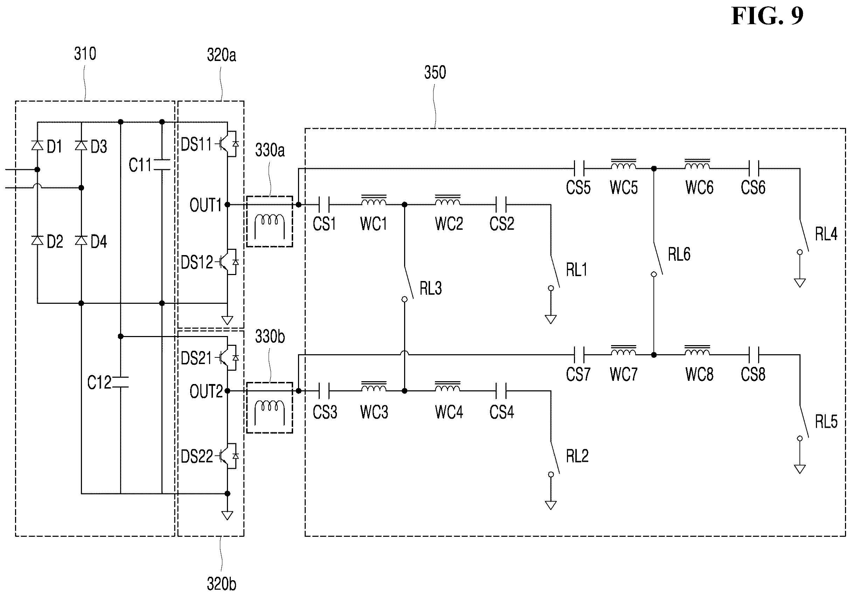

FIG. 9 is a diagram illustrating the rectifier circuit 310, a first inverter circuit 320a, a second inverter circuit 320b, and the load circuit 350 in a home appliance according to an embodiment of the present disclosure.

The rectifier circuit 310 converts an AC voltage having the magnitude and polarity (positive voltage or negative voltage) changing over time into a DC voltage having a constant magnitude and polarity, and converts an AC current having the magnitude and direction (positive current or negative current) changing over time into a DC current having a constant magnitude.

The rectifier circuit 310 may include a bridge diode. Specifically, the rectifier circuit 310 includes four diodes D1, D2, D3, and D4. The diodes D1, D2, D3, and D4 constitute two diode pairs D1 and D2, and D3, and D4, the two diodes of each pair being connected in series to each other, and the two diode pairs D1 and D2, D3, and D4 are connected in parallel with each other. The bridge diode converts an AC voltage of which the polarity changes over time into a positive voltage having a constant polarity over time, and converts an AC current of which the direction changes over time into a positive current having a constant direction over time.

In addition, the rectifier circuit 310 includes a DC connection capacitor C1. The DC connection capacitor C1 converts a positive voltage whose magnitude changes over time into a DC voltage having a constant magnitude over time.

The inverter circuit 320a and 320b include the first inverter circuit 320a and the second inverter circuit 320b. The first inverter circuit 320a supplies a first resonant current to the load circuit 350 through a first output terminal OUT1 according to the switching operation of the switching elements DS11 and DS12. The second inverter circuit 320b supplies a second resonant current to the load circuit 350 through a second output terminal OUT2 according to the switching operation of the switching elements DS21 and DS22.

A first current sensing circuit 330a converts the first resonant current to be supplied from the first inverter circuit 320a to the load circuit 350 so as to have a predetermined ratio of the intensity of the first resonant current. The converted first resonant current is provided to the resonant current time-point sensing circuit 370. A second current sensing circuit 330b converts the second resonant current to be supplied from the second inverter circuit 320a to the load circuit 350 350 so as to have a predetermined ratio of the intensity of the second resonant current. The converted second resonant current is provided to the resonant current time-point sensing circuit 370.

The load circuit 350 may include at least one resonant capacitor CS1, CS2, CS3, CS4, CS5, CS6, CS7, and CS8, at least one heating coil WC1, WC2, WC3, WC4, WC5, WC6, WC7, and WC8, and at least one relay RL1, RL2, RL3, RL4, RL4, and RL6 that are connected in series or in parallel with each other.

The resonant capacitor CS1, CS2, CS3, CS4, CS5, CS6, CS7, and CS8 may be used to filter a DC component from the driving current. The heating coil WC1, WC2, WC3, WC4, WC5, WC6, WC7, and WC8 may be used to heat the cooking container using electromagnetic induction. The relay RL1, RL2, RL3, RL4, RL4, and RL6 may be used to selectively connect the heating coils WC1, WC2, WC3, WC4, WC5, WC6, WC7, and WC8 in series or in parallel with each other. In addition, the heating coil WC1, WC2, WC3, WC4, WC5, WC6, WC7, and WC8 and the capacitor CS1, CS2, CS3, CS4, CS5, CS6, CS7, and CS8 may be used to determine the resonance frequency of the driving current.

The load circuit 350 may include a first resonant capacitor CS1 configured to transmit the first resonant current supplied from the first inverter circuit 320a, a first heating coil WC1 connected in series to the first resonant capacitor CS1, a second heating coil WC2 connected in series to the first heating coil WC1, a second resonant capacitor CS2 connected in series to the second heating coil WC2, and a first relay RL1 configured to connect or disconnect the second resonant capacitor CS2 and the ground voltage terminal to or from each other.

In addition, the load circuit 350 may further include a third resonant capacitor CS3 configured to transmit the second resonant current supplied from the second inverter circuit 320b, a third heating coil WC3 connected in series to the third resonant capacitor CS3, a fourth heating coil WC4 connected in series to the third heating coil WC3, a fourth resonant capacitor CS4 connected in series to the fourth heating coil WC4, and a second relay RL2 configured to connect or disconnect the fourth resonant capacitor CS4 and the ground voltage terminal to or from each other.

In addition, the load circuit 350 may further include a third relay RL3 for switching a node between the first heating coil WC1 and the second heating coil WC2 and a node between the third heating coil WC3 and the fourth heating coil WC4 to or from each other.

In addition, the load circuit 350 may further include a fifth resonant capacitor CS5 configured to transmit the first resonant current supplied from the first inverter circuit 320a, a fifth heating coil WC5 connected in series to the fifth resonant capacitor CS5, a sixth heating coil WC6 connected in series to the fifth heating coil WC5, a sixth resonant capacitor CS6 connected in series to the sixth heating coil WC6, and a fourth relay RL4 configured to connect or disconnect the sixth resonant capacitor CS6 and the ground voltage terminal.

In addition, the load circuit 350 may further include a seventh resonant capacitor CS7 configured to transmit the second resonant current supplied from the second inverter circuit 320b, a seventh heating coil WC7 connected in series to the seventh resonant capacitor WC7, an eighth heating coil WC8 connected in series to the seventh heating coil CS7, an eighth resonant capacitor CS8 connected in series to the eighth heating coil WC7, and a fifth relay RL5 configured to connect or disconnect the eighth resonant capacitor CS8 and the ground voltage terminal to or from each other.

In addition, the load circuit 350 may further include a sixth relay RL6 for connecting or disconnecting a node between the fifth heating coil WC5 and the sixth heating coil WC6 and a node between the seventh heating coil WC7 and the eighth heating coil WC8 to or from each other.

The current sensing circuit may include the first current sensing circuit 330a configured to sense the first resonant current output from the first inverter circuit 320a and the second current sensing circuit 330b configured to sense the second resonant current output from the second inverter circuit 320b. The first current sensing circuit 330a and the second current sensing circuit 330b may respectively sense the first resonant current output from the first inverter circuit 320a and the second resonant current output from the second inverter circuit 320b.

The resonant current time-point sensing circuit 370 may include a first resonant current time-point sensing circuit that compares a first voltage corresponding to the first resonant current detected by the first current sensing circuit 330a with a reference voltage and outputs a first pulse signal according to a result of the comparison. In addition, the resonant current time-point sensing circuit 370 may include a second resonant current time-point sensing circuit that compares a second voltage corresponding to the second resonant current detected by the second current sensing circuit 330b with a reference voltage, and outputs a second pulse signal according to a result of the comparison.

The controller 500 may individually determine the frequency operating region of the first inverter circuit 320a and the frequency operating region of the second inverter circuit 320b based on the first pulse signal and the second pulse signal respectively output from the first resonant current time-point sensing circuit and the second resonant current time-point sensing circuit. When the frequency operating region of the first inverter circuit 320a or the frequency operating region of the second inverter circuit 320b is determined to be the capacitive region a predetermined number or greater of times, the controller 500 may individually adjust the switching frequency of the first inverter circuit 320a or the second inverter circuit 320b.

A home appliance according to an embodiment of the present disclosure includes a load circuit including at least one heating coil and at least one resonant capacitor; an inverter circuit configured to supply a resonant current to the load circuit according to switching operation thereof; a current sensing circuit configured to sense the resonance current; a resonant current time-point sensing circuit configured to compare a voltage corresponding to the resonant current detected by the current sensing circuit with a reference voltage and to output a pulse signal based on the comparison result; and a controller configured to: determine a frequency operating region of the inverter circuit based on the pulse signal; and in response to that the frequency operating region is determined as a capacitive region a predetermined number or greater of times based on a result of the determination, perform operation setting of the inverter circuit.

In accordance with one embodiment, the controller may be configured to: generate a trigger signal in synchronization with a falling edge of the pulse signal; and determine the frequency operating region based on an elapsed time from a switching frequency count start time point of the inverter circuit to a time point at which the trigger signal occur.

In accordance with one embodiment, the operation setting of the inverter circuit may include initializing the inverter circuit.

In accordance with one embodiment, the operation setting of the inverter circuit may include performing switching operation of the inverter circuit at a switching frequency immediately before the capacitive region.

In accordance with one embodiment, the operation setting of the inverter circuit may include notifying a user of a predetermined message.

In accordance with one embodiment, in response to that the elapsed time is greater than a first reference time, the controller may be configured to determine the frequency operating region as an inductive region.

In accordance with one embodiment, the first reference time may be set to "switching frequency count value/2 + dead time".

In accordance with one embodiment, in response to that the elapsed time is smaller than the first reference time and is greater than a second reference time, the controller may be configured to determine the frequency operating region as a resonance point region.

In accordance with one embodiment, the second reference time may be set to "switching frequency count value/2 - dead time".

In accordance with one embodiment, in response to that the elapsed time is smaller than the second reference time and is greater than a third reference time, the controller may be configured to determine the frequency operating region as the capacitive region.

In accordance with one embodiment, the third reference time may be set to "switching frequency count value/4".

In accordance with one embodiment, the current sensing circuit may include: a current converter configured to convert the resonant current output from the inverter circuit so as to have a predetermined ratio of an intensity of the resonant current; and a stabilization circuit configured to stabilize and output the converted resonant current.

In accordance with one embodiment, the stabilization circuit may include at least one resistor connected in parallel to the current converter and having one end connected to a ground voltage terminal and the other end connected to an output terminal of the stabilization circuit; and a stabilization capacitor connected in parallel with the at least one resistor and having one end connected to the ground voltage terminal and the other end connected to the output terminal.

In accordance with one embodiment, the resonant current time-point sensing circuit may include: a first diode connected to an output terminal of the current sensing circuit; a first resistor connected in series to the first diode; a second diode having one end connected to a power voltage terminal and the other end connected to the first resistor; a second resistor having one end connected to the first resistor and the other end connected to a ground voltage terminal; a third resistor connected in series to the first resistor; a comparator having a first input terminal connected to the third resistor and a second input terminal connected to a reference voltage terminal; and a fourth resistor disposed between and connected to an output terminal and the first input terminal of the comparator.

In accordance with one embodiment, the resonant current time-point sensing circuit may include: first and second reference resistors connected in series to each other and disposed between and connected to the power voltage terminal and the ground voltage terminal; and a reference capacitor disposed between and connected to a node between the first and second reference resistors and the ground voltage terminal, wherein the node between the first and second reference resistors may be the reference voltage terminal and may be connected to the second input terminal of the comparator.

In accordance with one embodiment, the at least one heating coil may be formed into an integral multilayer PCB pattern assembly.

In accordance with one embodiment, the inverter circuit may include first and second switching elements connected in series to each other and disposed between and connected to a high potential terminal and a low potential terminal.

In accordance with one embodiment, in response to that the frequency operating region of the inverter circuit is determined to be the capacitive region a predetermined number or greater of times, the controller may be configured to adjust a switching frequency for driving each of the first and second switching elements to change the frequency operating region to an inductive region.

In accordance with one embodiment, the inverter circuit may include: a first inverter circuit configured to supply a first resonant current to the load circuit; and a second inverter circuit configured to supply a second resonant current to the load circuit, wherein the current sensing circuit may include: a first current sensing circuit configured to sense the first resonant current output from the first inverter circuit; and a second current sensing circuit configured to sense the second resonant current output from the second inverter circuit, wherein the first current sensing circuit and the second current sensing circuit respectively sense the first resonant current and the second resonance current.

In accordance with one embodiment, the resonant current time-point sensing circuit may include: a first resonant current time-point sensing circuit configured to compare a first voltage corresponding to the first resonant current with the reference voltage and to output a first pulse signal based on the comparison result therebetween; and a second resonant current time-point sensing circuit configured to compare a second voltage corresponding to the second resonant current with the reference voltage and to output a second pulse signal based on the comparison result therebetween.

In accordance with one embodiment, the controller may be configured to individually determine a frequency operating region of the first inverter circuit and a frequency operating region of the second inverter circuit, respectively based on the first pulse signal and the second pulse signal, wherein in response to that the frequency operating region of the first inverter circuit or the second inverter circuit may be determined to be the capacitive region a predetermined number or greater of times, the controller may be configured to adjust a switching frequency of the first inverter circuit or the second inverter circuit such that the frequency operating region may be changed to an inductive region.

Although the present invention has been described above with reference to the embodiments illustrated in the drawings, this is merely an example, and those skilled in the art will understand that various modifications and other equivalent embodiments may be derived therefrom. Accordingly, the true technical protection scope of the present invention should be determined by the following claims.

## Claims

1. A home appliance comprising:
a load circuit including at least one heating coil and at least one resonant capacitor;
an inverter circuit configured to supply a resonant current to the load circuit according to switching operation thereof;
a current sensing circuit configured to sense the resonance current;
a resonant current time-point sensing circuit configured to compare a voltage corresponding to the resonant current detected by the current sensing circuit with a reference voltage and to output a pulse signal based on the comparison result; and
a controller configured to:
determine a frequency operating region of the inverter circuit based on the pulse signal; and
in response to that the frequency operating region is determined as a capacitive region a predetermined number or greater of times based on a result of the determination, perform operation setting of the inverter circuit.

2. The home appliance of claim 1, wherein the controller is configured to:
generate a trigger signal in synchronization with a falling edge of the pulse signal; and
determine the frequency operating region based on an elapsed time from a switching frequency count start time point of the inverter circuit to a time point at which the trigger signal occur.

3. The home appliance of claim 2, wherein the operation setting of the inverter circuit includes at least one of initializing the inverter circuit, performing switching operation of the inverter circuit at a switching frequency immediately before the capacitive region, and notifying a user of a predetermined message.

4. The home appliance of claim 2, wherein in response to that the elapsed time is greater than a first reference time, the controller is configured to determine the frequency operating region as an inductive region, wherein the first reference time is set to "switching frequency count value/2 + dead time".

5. The home appliance of claim 4, wherein in response to that the elapsed time is smaller than the first reference time and is greater than a second reference time, the controller is configured to determine the frequency operating region as a resonance point region, wherein the second reference time is set to "switching frequency count value/2 - dead time".

6. The home appliance of claim 5, wherein in response to that the elapsed time is smaller than the second reference time and is greater than a third reference time, the controller is configured to determine the frequency operating region as the capacitive region, wherein the third reference time is set to "switching frequency count value/4".

7. The home appliance of claim 1, wherein the current sensing circuit includes:
a current converter configured to convert the resonant current output from the inverter circuit so as to have a predetermined ratio of an intensity of the resonant current; and
a stabilization circuit configured to stabilize and output the converted resonant current.

8. The home appliance of claim 7, wherein the stabilization circuit includes
at least one resistor connected in parallel to the current converter and having one end connected to a ground voltage terminal and the other end connected to an output terminal of the stabilization circuit; and
a stabilization capacitor connected in parallel with the at least one resistor and having one end connected to the ground voltage terminal and the other end connected to the output terminal.

9. The home appliance of claim 1, wherein the resonant current time-point sensing circuit includes:
a first diode connected to an output terminal of the current sensing circuit;
a first resistor connected in series to the first diode;
a second diode having one end connected to a power voltage terminal and the other end connected to the first resistor;
a second resistor having one end connected to the first resistor and the other end connected to a ground voltage terminal;
a third resistor connected in series to the first resistor;
a comparator having a first input terminal connected to the third resistor and a second input terminal connected to a reference voltage terminal; and
a fourth resistor disposed between and connected to an output terminal and the first input terminal of the comparator.

10. The home appliance of claim 9, wherein the resonant current time-point sensing circuit includes:
first and second reference resistors connected in series to each other and disposed between and connected to the power voltage terminal and the ground voltage terminal; and
a reference capacitor disposed between and connected to a node between the first and second reference resistors and the ground voltage terminal,
wherein the node between the first and second reference resistors is the reference voltage terminal and is connected to the second input terminal of the comparator.

11. The home appliance of claim 1, wherein the at least one heating coil is formed into an integral multilayer PCB pattern assembly.

12. The home appliance of claim 1, wherein the inverter circuit includes first and second switching elements connected in series to each other and disposed between and connected to a high potential terminal and a low potential terminal.

13. The home appliance of claim 12, wherein in response to that the frequency operating region of the inverter circuit is determined to be the capacitive region a predetermined number or greater of times, the controller is configured to adjust a switching frequency for driving each of the first and second switching elements to change the frequency operating region to an inductive region.

14. The home appliance of claim 1, wherein the inverter circuit includes:
a first inverter circuit configured to supply a first resonant current to the load circuit; and
a second inverter circuit configured to supply a second resonant current to the load circuit,
wherein the current sensing circuit includes:
a first current sensing circuit configured to sense the first resonant current output from the first inverter circuit; and
a second current sensing circuit configured to sense the second resonant current output from the second inverter circuit,
wherein the first current sensing circuit and the second current sensing circuit respectively sense the first resonant current and the second resonance current,
wherein the resonant current time-point sensing circuit includes:
a first resonant current time-point sensing circuit configured to compare a first voltage corresponding to the first resonant current with the reference voltage and to output a first pulse signal based on the comparison result therebetween; and
a second resonant current time-point sensing circuit configured to compare a second voltage corresponding to the second resonant current with the reference voltage and to output a second pulse signal based on the comparison result therebetween.

15. The home appliance of claim 14, wherein the controller is configured to individually determine a frequency operating region of the first inverter circuit and a frequency operating region of the second inverter circuit, respectively based on the first pulse signal and the second pulse signal,
wherein in response to that the frequency operating region of the first inverter circuit or the second inverter circuit is determined to be the capacitive region a predetermined number or greater of times, the controller is configured to adjust a switching frequency of the first inverter circuit or the second inverter circuit such that the frequency operating region is changed to an inductive region.
